# EUROPEAN PATENT APPLICATION

(11) **EP 1 622 098 A1**
(43) Date of publication of application: **01.02.2006**
(21) Application number: 04018182.8
(22) Date of filing: 30.07.2004
(51) Int. Cl.: G07F 7/10

(54) **IC card secure personalization method**

(71) Applicant: ST Incard S.r.l., 20041 Agrate Brianza (Milano) (IT)
(72) Inventor: Vanore, Agostino, 81020 San Marco Evangelista (Caserta) (IT)
(74) Representative: Ferrari, Barbara

(57) **Abstract**

The present invention relates to a method for completing the manufacturing phases of an IC card performing a final and secure personalization phase of a semi finished IC card (1) including a non volatile memory portion (4) wherein personalization data and information are stored in secret allocations, characterized by the following steps:
- storing an algorithm inside said non volatile memory portion (4) processing data as an ended-state machine (10);
- enabling an entity different from the card manufacturer to access said algorithm for storing all necessary data and information required by said personalization phase, according to a designated application field of said IC card;
- enabling said algorithm to receive said data and information;
- storing said data and information in memory locations of said non volatile memory portion (4) according to a predetermined data structure and an access procedure hidden to said entity.

Thus, according to the invention, personalization data are stored in the card without any knowledge about the location wherein the data will be stored.

## Description

### Field of the Invention

The present invention relates to an Integrated Circuit card including means for providing a specific personalization of the card.

More specifically, the invention relates to a method for completing the manufacturing phases of an IC card and more specifically for performing a final and secure personalization phase of a semi finished IC card including a non volatile memory portion wherein the personalization data and information are stored in secret allocations.

In the following lines we will make reference to an IC card for specific purpose applications, for instance telephonic applications, and will also use the term "smart card" as an alternative to IC card but without limiting the scope of protection of the present invention.

### Prior art

As is well known in this field, the IC card manufacturing steps include a set of phases each having a well defined purpose in terms of providing a specific characterization or functionality to the card.

A first phase regards a functional configuration of the card while the last phase relates to a "personalization" phase.

This personalization phase requires the storing of specific secret data and information in the smart card non-volatile memory portion to allow right working of the card in the designated application field.

The stored information identify each smart card.

The physical location in the non-volatile memory, where all data are stored, represent an industrial secret of the manufacturer and are normally out from the scope of standardizations.

Let's consider as an example the GSM communication standard which defines the concept of "authentication key" but does not standardize where the key shall be stored on the card or the format representing and protecting such a key.

The methods for the data storing should guarantee the memory location secrecy.

Again, in the IC card manufacturing steps two different working states can also be distinguished that may be defined as: "ADMINISTRATIVE" and "SECURED".

In the ADMINISTRATIVE state a set of commands are available for the user or administrator to perform the functional configuration, accessing to each position in the smart card non-volatile memory portion.

Then, always in the ADMINISTRATIVE state, the free access to the memory guarantees that the "personalization" process can be performed storing all required data in "known" locations.

The ADMINISTRATIVE state is also an intermediate state in which the smart card can stay for further production steps.

Only at the end of the production process the smart card shall be promoted in the SECURED state.

The SECURED state is a final state in which the smart card is passed from the manufacturer to the customer.

All secret data stored in the non-volatile memory portion of the card cannot be free accessed anymore. If, for any reason, the "personalization" process is not performed by the manufacturer, it cannot be performed anymore.

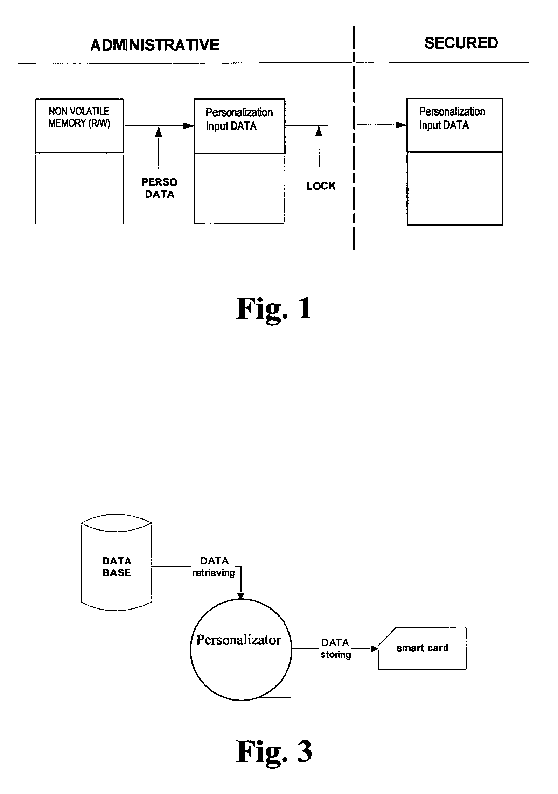

Figure 1 is a schematic view showing the action steps performed to reach the secured state from the administrative state. These steps are performed by the same manufacturer.

This situation may be considered a restriction for providing a semi finished production by a smart cards manufacturer, since the final personalization in the secured state cannot be performed outside the factory.

Therefore, this fact is a strong limitation to the possibility of supplying outside a predetermined number of "micro-modules", that is to say: unfinished IC cards not yet protected in the secured state.

In such a case, when the "personalization" process should be performed by another organization or company, the only possibility to implement the personalization phase would be that of disclosing industrial secrets regarding the memory locations and the manner in which the card stores secretes data.

As may be easily understood, any disclosure of industrial secrets must obviously avoided by any smart card manufacturer.

The aim of the present invention is that of allowing the implementation of the IC card personalization step outside the organization of company taking care of the IC card manufacturing.

Another aim of the present invention is that of allowing a correct and secure personalization phase to be performed by an organization or company not having access to information concerning the manner in which the card stores secretes data.

### Summary of the invention

According to a first embodiment of the present invention the personalization method of the present invention is characterized by the following steps:
- storing an algorithm inside said non volatile memory portion processing data as an ended-state machine;
- enabling an entity different from the card manufacturer to access said algorithm for storing all necessary data and information required by said personalization phase, according to a designated application field of said IC card;
- enabling said algorithm to receive said data and information;
- storing said data and information in memory locations of said non volatile memory portion according to a predetermined data structure and an access procedure hidden to said entity.
   The features and advantages of the personalization method according to the present invention will be disclosed in the following description given by way of non-limiting illustrative example with reference to the drawings views.

### Brief Description of the Drawings

- Figure 1 is a schematic view showing the action steps performed to reach the secured state from the administrative state as performed by a same manufacturer;
- Figure 2 is a schematic view of an IC card system including integrated circuit portions provided for implementing the method according to the present invention;
- Figure 3 is a schematic view of a personalization phase performed by an entity different from the manufaturer of the IC card;
- Figure 4 is a schematic view showing different personalization process steps depending on the application field and involving different personalization commands or instructions and different memory location where storing data;
- Figure 5 is a schematic view showing an ended-state machine stored in a non volatile memory portion of the IC card of Figure 2;

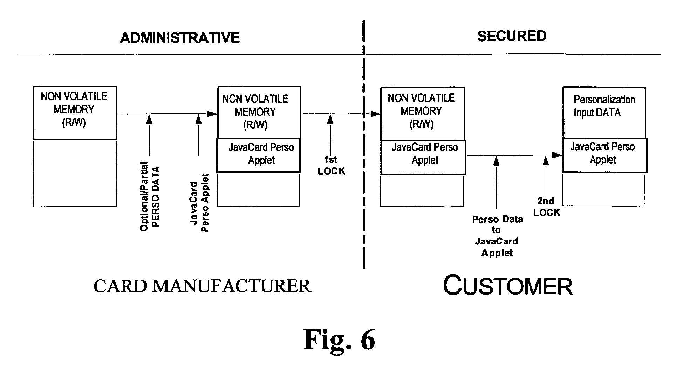

- Figure 6 is a schematic view showing a JavaCard applet loaded into the IC card of Figure 2 during an administrative phase.

### Detailed Description

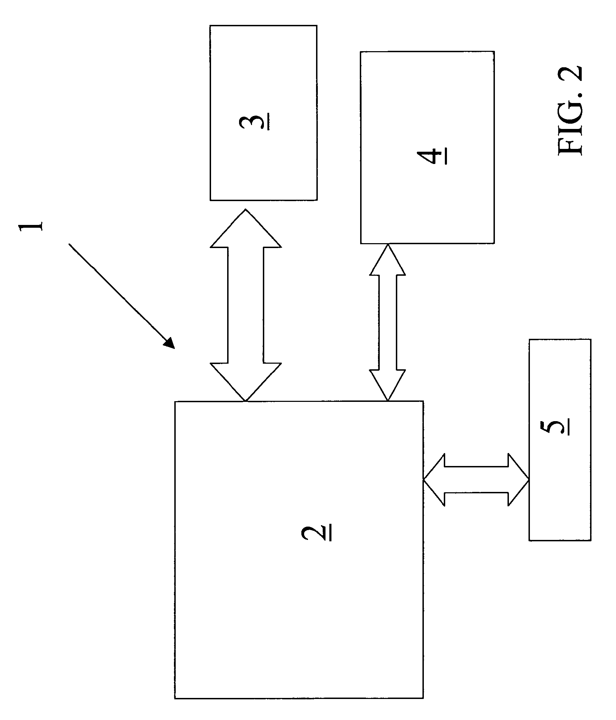

With reference to the drawings figures, and more specifically to the example of figure 2, an IC card realized according to the present invention is globally and schematically shown with the numeral reference 1. The IC card 1 include means 10 for allowing a final personalization step to be performed by an organization or company different from the manufacturer of the card.

Thus, the invention relates to a method for completing the manufacturing phases of an IC card performing a final and secure personalization phase of a semi finished IC card including a non volatile memory portion wherein personalization data and information are stored in secret allocations.

The IC card 1 may have the format and the external shape of a common SIM card for mobile telephonic application. However, nothing prevents from having the card 1 structured according to a different shape or format required by a specific application.

The IC card 1 includes a conventional microcontroller 2 or microprocessor and conventional memory portions 3, 4 and 5 which are strictly associated to the microcontroller 2.

The microcontroller 2 and the associated memory portions may be considered and integrated embedded system equipped with a first read-only memory portion 3, a second or extended non-volatile memory portion 4 and at least a further memory portion 5.

The first memory portion is generally a ROM memory including programs, i.e. software applications, masked on the read-only memory and defining the functionalities of the card.

Said second and extended memory portion 4 is a non volatile memory may be an electrically erasable memory portion of the EEPROM or Flash normally having a NOR structure and including subroutines, extended instructions and or customised data.

Said further memory portion 5 may be structurally and functionally independent from both said first read only memory portion 3 and said extended memory portion 4 and may be a read/write memory such as a volatile RAM.

As an alternative, even said further memory portion 5 may be a EEPROM or another non-volatile memory device.

The IC card 1 may be considered a semi finished product since the final personalization phase is missing from the card. However, the IC card 1 includes means 10 for allowing an external source implementing this final personalization phase that depends on the application field. In other words, the application field involves different personalization commands or methods and different memory locations where to store secret data and information.

The invention provides a method for performing the personalization phase on the smart card in the Secured state.

The inventive method allows the smart card personalization phase to be performed by an organization or company not having access to information concerning the manner in which the card stores secretes data.

To do so, the method provides an abstraction of the data storing in the non-volatile smart card memory portion.

In other words, according to the inventive method the knowledge of the data location is hidden for the entity performing the final personalization phase.

The method is characterized by the following steps:
- storing an algorithm inside said non volatile memory portion 4 processing data as an ended-state machine 10;
- enabling an entity different from the card manufacturer to access said algorithm for storing all necessary data and information required by said personalization phase, according to a designated application field of said IC card;
- enabling said algorithm to receive said data and information;
- storing said data and information in memory locations of said non volatile memory portion 4 according to a predetermined data structure and an access procedure hidden to said entity.

The memory location knowledge for the data storing is a prerequisite for allowing performing the operation; this knowledge depends on the application field and it also characterizes the smart card product.

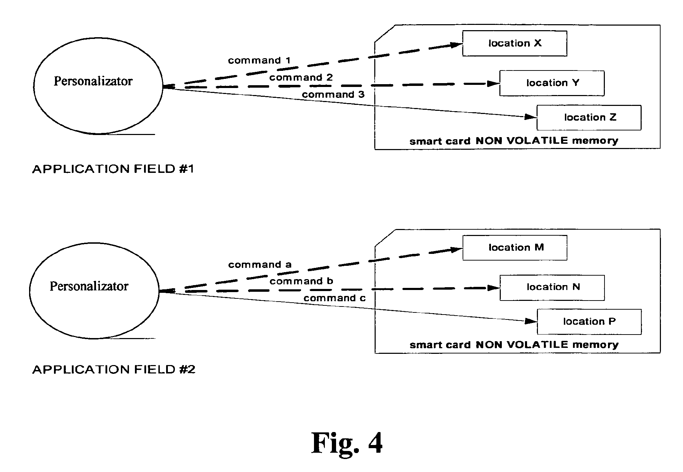

The figure 3 shows the different personalization process depending on the application field. The application field involves different personalization commands or methods and different memory location where to store data.

Thus, according to the invention, different personalization commands corresponding to different memory location where to store data are included in said non volatile memory portion. Moreover, personalization data are stored in the card during the personalization phase without any knowledge by the entity different from the card manufacturer about the location wherein the data will be stored. This is obtained by means of a process performed by the state machine 10 taking care of the data storing but not showing any information about the data location.

This abstraction provides a process independent from the smart card application field.

The method steps are identified by the processing of an ended-state machine 10 shown in figure 4.

A beginning state (IDLE state) corresponds to the SECURED state at the end of all personalization and end production steps.

The transactions from one state to another state may be activated by predetermined events that and are listed as follows:
- Personalization Process Enabling;
- Security Authentication;
- Data Sending;
- Personalization Completion;

Each event is triggered by a command sent to the smart card microprocessor 2.

The commands are the following, wherein the term "PERSO" means personalization:
- ENABLE PERSO
- VERIFY PERSO CODE
- PUT PERSO DATA
- LOCK PERSO

At the beginning of the personalization process, the card 1 is in the IDLE state, ready for receiving one of the above commands.

This is the starting point for the personalization process and the smart card will return in this initial state every time after a reset command, as shown in Figure 4.

An ENABLE PERSO command allows the transaction on the READY state. In this READY state the smart card has been enabled to receive the commands specified for the data personalization.

When the card is in this READY state an authentication command shall be evaluated before sending data for security reason. This is shown in Figure 4 by the verify steps.

Then, the READY state is a transition state and only the VERIFY PERSO CODE command will be accepted.

Upon receiving the right input code the state will be changed in the PERSO state; while in case of receipt of a wrong code, the new state will be an ALERT state.

The ALERT state is another transition state and only the VERIFY PERSO CODE command will be accepted.

Upon receiving the right input code the new PERSO state will be reached, but a after some attempts receiving a wrong PERSO code the new state will be BLOCKED.

The BLOCKED state is an irreversible state and the smart card cannot be personalized anymore and must be discharged.

Then, after a VERIFY PERSO CODE successfully performed, the PERSO state will be reached and the data can be sent to the smart card through the PUT PERSO DATA commands.

In fact it could be possible to send a sequence of the PUT PERSO DATA command with different format for the "personalization" completion.

When all the "personalization" data has been stored in the smart card non volatile memory portion 4, the last command to send is the LOCK PERSO command. The LOCK PERSO state ends the "personalization" process.

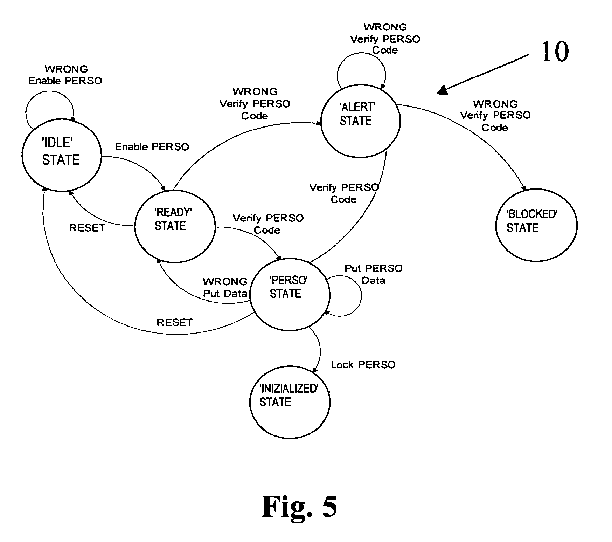

The inventive method may be based on a JavaCard applet loaded into the smart card during the "ADMINISTRATIVE" phase as schematically shown in Figure 5.

After the first LOCK the IC card passes in the "SECURED" state. Then the personalization data can be stored, by the customer, only via the "personalization applet".

The "personalization applet" allows to implement the steps of the inventive the process described above, providing the abstraction for the data storing in the non-volatile smart card memory portion.

## Claims

1. A method for completing the manufacturing phases of an IC card performing a final and secure personalization phase of a semi finished IC card (1) including a non volatile memory portion (4) wherein personalization data and information are stored in secret allocations, **characterized by** the following steps:
- storing an algorithm inside said non volatile memory portion (4) processing data as an ended-state machine (10);
- enabling an entity different from the card manufacturer to access said algorithm for storing all necessary data and information required by said personalization phase, according to a designated application field of said IC card;
- enabling said algorithm to receive said data and information;
- storing said data and information in memory locations of said non volatile memory portion (4) according to a predetermined data structure and an access procedure hidden to said entity.

2. Method according to claim 1 wherein a security authentication step is performed before enabling said algorithm to receive said data and information.

3. Method according to claim 1 wherein said ended-state machine (10) processes said data and information according to an event triggered by a command sent to a microprocessor (2) of the IC card.

4. Method according to claim 3 wherein the transactions from one state to another state of said ended-state machine (10) are activated by the following predetermined events:
• Personalization Process Enabling;
• Security Authentication;
• Data Sending;
• Personalization Completion;

5. Method according to claim 4 wherein each of said event is triggered by a specific set of commands sent to the smart card; said commands being:
• ENABLE PERSO
• VERIFY PERSO CODE
• PUT PERSO DATA
• LOCK PERSO

6. Method according to claim 5 wherein said ENABLE PERSO command allows the transaction on a READY state wherein the IC card is enabled to receive the commands specified for the data personalization.

7. Method according to claim 6 wherein said READY state is a transition state and only said VERIFY PERSO CODE command is accepted.

8. Method according to claim 1 wherein different personalization commands corresponding to different memory location where to store data are included in said non volatile memory portion (4).

9. Integrated Circuit card including means for providing a specific personalization of the card according to claim 1.
